# EUROPÄISCHE PATENTSCHRIFT

(11) **EP 0 610 827 B1**
(45) Veröffentlichungstag und Bekanntmachung des Hinweises auf die Patenterteilung: **16.10.1996**
(21) Anmeldenummer: 94101719.6
(22) Anmeldetag: 04.02.1994
(51) Int. Cl.: B23K 26/00

(54) **Verfahren zur Herstellung von verzinkten Stabelementen für Fachwerke, insbesondere Raumfachwerke**
Manufacturing process of tinned bar elements for frameworks, in particular for space frameworks
Procédé de fabrication d'éléments zingués en forme de barre pour treillis, en particulier pour treillis tri-dimentionnels

(30) Priorität: 10.02.1993 DE 4303826
(43) Veröffentlichungstag der Anmeldung: 17.08.1994
(73) Patentinhaber: MERO-Raumstruktur GmbH & Co. Würzburg, D-97082 Würzburg (DE)
(72) Erfinder: Eberlein, Helmut, Dr., D-97082 Würzburg (DE); Brückner, Günther, D-97355 Abtswind (DE); Schmidek, Reinhard, D-97246 Eibelstadt (DE)
(74) Vertreter: Böck, Bernhard, Dipl.-Ing.

(56) Entgegenhaltungen:
- DE-A- 2 240 613
- US-A- 4 023 005

## Beschreibung

Die Erfindung bezieht sich auf ein Verfahren zur Herstellung von verzinkten Stabelementen insbesondere für Fachwerke oder Raumfachwerke bei dem an den Enden eines Hohlstabs Endstücke, vorzugsweise kegelstumpfförmige Endstücke durch Ringschweißungen befestigt werden, wobei die Ringschweißungen unter Drehung des Hohlstabs und der Endstücke in axial fixierten (eingespannten) und gegenseitig zentrierten Lagen erfolgen.

Die hier in Rede stehenden Stabelemente weisen in ihren Endstücken durch sog. Schlüsselmuffen drehbare Schrauben auf, mittels welcher die Stabelemente an Knotenstücken mit konzentrischen Gewindebohrungen anschließbar sind, um Fachwerke oder Raumfachwerke für die verschiedensten Zwecke herzustellen. Dabei ist es erforderlich, daß die in der Regel aus Stahl bestehenden Stabelemente einen Korrosionsschutz erhalten, welcher häufig durch einen Zinküberzug gebildet ist. Zu diesem Zweck werden die fertigen Stabelemente, bestehend aus einem Hohlstab mit angeschweißten Endstücken, auf übliche Weise verzinkt, wobei durch Löcher in den Hohlstäben das flüssige Zink auch in das Innere des Stabelements gelangen kann. Die Befestigungsschrauben werden erst nach erfolgter Verzinkung der Stabelemente durch die erwähnten Löcher in die Stabelemente eingeführt, in die Bohrungen in den Endstücken eingesetzt und verstiftet. Diese Herstellungsmethode ist jedoch sehr umständlich und zeitaufwendig. Letzteres gilt auch für die Ausbildung der Ringschweißungen zur Verbindung der Endstücke mit dem Hohlstab. Diese Ringschweißungen hat man bisher als elektrische Schutzgas-Schweißungen, auch als MAG-Schweißverfahren bezeichnet, ausgeführt (vgl. DE-PS 2 240 613). Bei diesem elektrischen Schutzgas-Schweißverfahren ist es außerdem erforderlich, zwischen den Enden des Hohlstabes und den Endstücken jeweils einen schmalen Spalt einzustellen, der mit Zusatzschweißwerkstoff ausgefüllt werden muß. Andererseits kommt es bei den hier in Rede stehenden Stabelementen auf sehr genaue Längenabmessungen an, was beim Verschweißen der Endstücken mit den Hohlstäben zu berücksichtigen ist.

Der Erfindung liegt die Aufgabe zugrunde, ein im Vergleich zum Stand der Technik einfacheres und auch wirtschaftlicheres Verfahren zur Herstellung von verzinkten Stabelementen insbesondere für Fachwerke oder Raumfachwerke anzugeben.

Gemäß der Erfindung wird obige Aufgabe dadurch gelöst, daß der Hohlstab und die Endstücke für jedes Stabelement als Einzelteile verzinkt und dann die Ringschweißungen zwischen dem verzinkten Hohlstab und den verzinkten Endstücken durch Laser-Schweißen so ausgeführt werden, daß sich im Verlauf des Schweißvorgangs ein von den angeschmolzenen Zinküberzügen der benachbarten und zu verbindenden Teile gespeister Zinküberzug selbsttätig über jede Ringschweißnahtoberfläche ausbildet. Erfindungsgemäß werden also die Hohlstäbe und Endstücke für die Stabelemente getrennt voneinander verzinkt, was zahlreiche entscheidende Vorteile bringt. So entfallen die beim Stand der Technik erforderlichen Löcher in den Stabelementen, durch welche einerseits das Überzugsmaterial in das Innere der Stabelemente gelangen kann und andererseits die Befestigungsschrauben eingeführt werden. Die Stabelemente mit vollem, d.h. ungeschwächtem Querschnitt sind daher höher belastbar. Die Anwendung der Laser-Schweißtechnik zur Verbindung der Endstücke mit dem Hohlstab hat den Vorteil, daß sowohl die Wärmeeinflußzone wie auch die sichtbaren Schweißnahtoberflächen an der Oberseite des Hohlstabs auf einen Bruchteil der Größen bei herkömmlichen Schweißverfahren reduziert werden. Von diesem Vorteil der Laser-Schweißtechnik macht die Erfindung Gebrauch, denn durch die oben erwähnten geringeren Abmessungen und durch die größere Geschwindigkeit des Laser-Schweißvorganges wird erreicht, daß der Korrosionsschutz-Zinküberzug an den Rändern der zu verschweißenden Teile teilweise aufgeschmolzen bzw. angeschmolzen wird, über die schmalen Ringschweißnähte fließt und diese bedeckt. Nach Abschluß des Schweißvorganges erstreckt sich über jede Ringschweißnahtoberfläche eine geschlossene Zinkhaut, die mit den Zinküberzügen an den Rändern der verschweißten Teile verbunden ist. Zwar ist im Bereich der Ringschweißnähte die Zinkhaut im Vergleich zu den Zinküberzügen der verschweißten Einzelteile etwas reduziert, was jedoch korrosionsschutztechnisch ohne negativen Einfluß ist, weil durch die geringe Breite der Ringschweißnähte die kathodische Selbstschutzwirkung des Zinküberzügs voll wirksam wird. Hinzukommt als weiterer Vorteil, daß der Laser-Schweißprozeß gegenüber dem herkömmlichen elektrischen Schutzgas-Schweißen infolge der hohen Energiedichte der Laserstrahlen wesentlich schneller abläuft und außerdem wird hierbei auch kein Zusatzschweißwerkstoff notwendig. Es können also vorteilhaft beim Laser-Schweißen die Endstücke satt aufliegend gegen die Enden des Hohlstabs gehalten werden, was die Einhaltung genauer Längenabmessungen bei den herzustellenden Stabelementen erleichtert.

Gemäß einer Ausgestaltung der Erfindung werden der Hohlstab und die Endstücke der Stabelemente mit einem Zinküberzug versehen, der eine Dicke im Bereich von 80 µ hat. Bei dieser Zinkschichtdicke auf den Einzelteilen des Stabelements wird nach Abschluß des Laser-Schweißprozesses in jedem Fall auch eine ausreichend dicke Zinkschicht auf den Ringschweißnähten erreicht.

Die Erfindung wird anschließend anhand der Zeichnung beispielhaft erläutert. Es zeigen:
- Fig. 1: einen Längsschnitt eines Stabelements für z.B. ein Raumfachwerk, dessen Einzelteile im verzinkten Zustand durch Laser-Schweißen miteinander verbunden werden und
- Fig. 2: einen Ausschnitt im Bereich X in Fig. 1 in stark vergrößertem Maßstab.

Mit der Bezugszahl 10 ist ein typisches Stabelement für beispielsweise ein Raumfachwerk bezeichnet, welches sich aus einer Vielzahl solcher Stabelemente 10 und nicht gezeigten Knotenstücken zusammensetzt. Die aus Stahl bestehenden Stabelemente 10 sind zur Ausbildung eines Korrosionsschutzes außen und innen verzinkt.

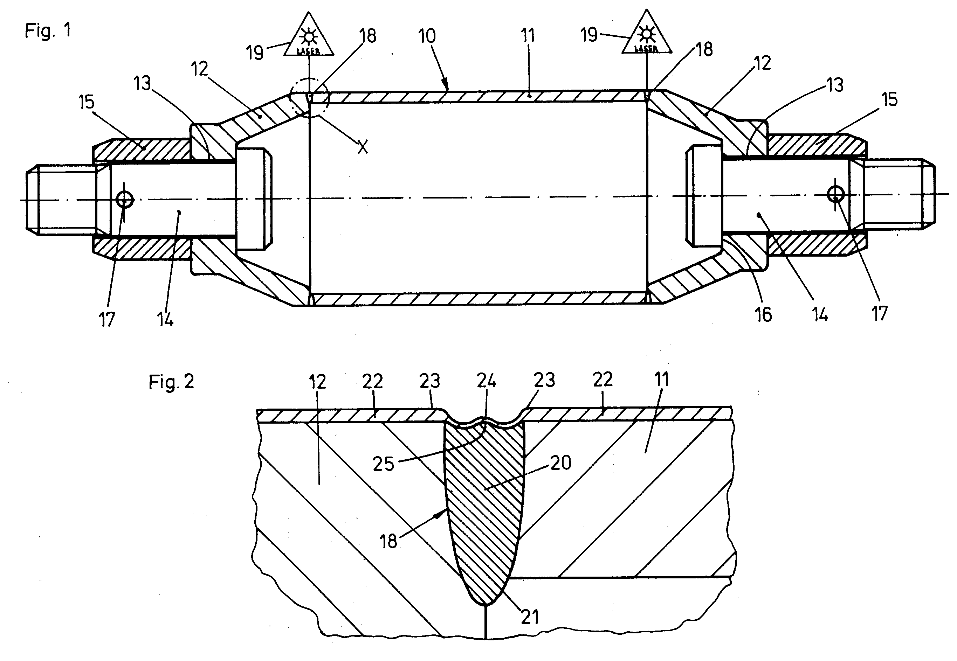

Im einzelnen setzt sich das Stabelement 10 aus einem Hohlstab bzw. Rohrstück 11 und zwei beispielsweise kegelstumpfförmigen Endstücken 12 zusammen. Die Endstücke 12 weisen jeweils eine mittige Bohrung 13 auf, durch welche sich je eine Befestigungsschraube 14 erstreckt. Jede Befestigungsschraube 14 kann mit Hilfe einer sog. Treibmuffe 15 und eines an dieser anzusetzenden nicht gezeigten Drehwerkzeugs in eine Gewindebohrung in einem Knotenstück (nicht gezeigt) eingedreht werden, wobei der Kopf der Befestigungsschraube 14 in Anlage mit einer ringförmigen Auflagefläche 16 in den Endstücken 12 kommt. Zwischen der Treibmuffe 15 und dem Schaft der Befestigungsschraube 14 ist eine übliche Stift-Schlitzverbindung vorgesehen, von welcher in Fig. 1 nur der Stift 17 angedeutet ist.

Bevor die Endstücke 12 mit dem Hohlstab 11 durch Laser-Ringschweißungen verbunden werden, werden diese Teile getrennt verzinkt. Zur Herstellung des Stabelements 10 werden der Hohlstab 11 und die Endstücke 12 in axial fixierten und gegenseitig zentrierten Lagen in einer drehbaren nicht gezeigten Spannvorrichtung eingespannt. Dabei werden die Stirnränder des Hohlstabs 11 in satter Anlage mit den entsprechenden Stirnrändern der Endstücke 12 gehalten. Wie schon erwähnt, werden die Endstücke 12 mit dem Hohlstab 11 durch Ringschweißungen bzw. Ringschweißnähte 18 verbunden, die durch schematisch angedeutete Laser-Schweißgeräte 19 erzeugt werden. Die Laser-Schweißgeräte 19 sind ortsfest angeordnet und die eingespannten Teile 11 und 12 des Stabelements 10 werden mit Hilfe der motorisch angetriebenen Spannvorrichtung an den Laser-Schweißgeräten 19 vorbeigedreht.

Die beiden Ringschweißnähte 18 können beispielsweise gleichzeitig hergestellt werden und es genügt daher, einen Schweißvorgang detailliert zu beschreiben.

Durch die hohe Energiedichte des Laserschweißstrahls wird eine Ringschweißnaht 18 mit einer verhältnismäßig tiefen Einbrandzone 20 ausgebildet, deren Wurzeldurchhang 21 sich über die Querschnittsdicke des Hohlstabs bzw. Rohrstücks 11 hinauserstreckt. Gleichwohl ist diese Einbrandzone 20 extrem schmal. Die ringförmigen Querschnittsflächen an den Stirnenden des Hohlstabs bzw. Rohrstücks 11 werden also voll für die Schweißverbindung genutzt.

Aufgrund der schon erwähnten hohen Energiedichte des Laserschweißstrahls werden die Zinküberzüge 22 an den Rändern 23 der zu verschweißenden Teile 11 und 12 angeschmolzen und das flüssige Zink fließt in die etwas vertieft liegende Zone oberhalb der Ringschweißnahtoberfläche 25. Nach Abschluß des Schweißvorganges verläuft ein mit den Zinküberzügen 22 der Teile 11 und 12 verbundener und auch in Umfangsrichtung geschlossener Zinküberzug 24 über die Ringschweißnahtoberfläche 25. Die Zinküberzug 24 hat zwar eine geringere Dicke als die Zinküberzüge 22 auf den Teilen 11 und 12, die jedoch für den angestrebten Korrosionsschutz völlig ausreichend ist, zumal die Breite des Zinküberzugs 24 genauso wie die der Ringschweißnaht 18 sehr gering ist.

Wenngleich vorstehend beschrieben ist, daß die zwei Ringschweißnähte 18 gleichzeitig ausgeführt werden können, ist es jedoch möglich, diese mit nur einem Laser-Schweißgerät 19 auch nacheinander auszubilden. Auch dadurch wird noch eine Zeiteinsparung gegenüber herkömmlichen Elektro-Schutzgasschweißverfahren erzielt, da der Laser-Schweißprozeß wesentlich schneller abläuft als ein herkömmlicher Schweißprozeß.

Um die Ausbildung eines ausreichend dicken Zinküberzugs 24 über den Ringschweißnähten 18 sicher zu stellen, hat sich gezeigt, daß ein Zinküberzug 22 mit einer Dicke im Bereich von 80 µ auf den zu verschweißenden Teilen 11 und 12 ausreichend ist. Die Wanddicke des Hohlstabs 11 bzw.

Rohrstücks liegt in der Regel zwischen 1,5 bis 4 mm, kann jedoch auch bis zu ca. 10 mm betragen, um die vorstehend beschriebenen Vorteile mit dem Laser-Schweißen zu erreichen.

## Patentansprüche

1. Verfahren zur Herstellung von verzinkten Stabelementen insbesondere für Fachwerke oder Raumfachwerke bei dem an den Enden eines Hohlstabs Endstücke, vorzugsweise kegelstumpfförmige Endstücke durch Ringschweißungen befestigt werden, wobei die Ringschweißungen unter Drehung des Hohlstabs und der Endstücke in axial fixierten (z.B. eingespannten) und gegenseitig zentrierten Lagen erfolgen, dadurch gekennzeichnet, daß der Hohlstab (11) und die Endstücke (12) für jedes Stabelement (10) als Einzelteile verzinkt und dann die Ringschweißungen (18) zwischen dem verzinkten Hohlstab (11) und den verzinkten Endstücken (12) durch Laser-Schweißen so ausgeführt werden, daß sich im Verlauf des Schweißvorganges ein von den angeschmolzenen Zinküberzügen (22) der benachbarten und zu verbindenden Teile (11,12) gespeister Zinküberzug (24) selbsttätig über jede Ringschweißnahtoberfläche (25) ausbildet.

2. Verfahren nach Anspruch 1, dadurch gekennzeichnet, daß der Hohlstab (11) und die Endstücke (12) der Stabelemente (10) mit einem Zinküberzug (22) versehen werden, der eine Dicke im Bereich von 80 µ hat.

## Claims

1. Process for producing galvanised rod elements, particularly for frameworks or room frameworks, in which end pieces, preferably frustum-shaped end pieces, are attached to the ends of a hollow rod by means of annular welds, wherein the annular welds are produced while rotating the hollow rod and the end pieces in axially fixed, for example clamped, and mutually centred positions, characterised in that the hollow rod (11) and the end pieces (12) for each rod element (10) are galvanised as individual parts and then the annular welds (18) are produced between the galvanised hollow rod (11) and the galvanised end pieces (12) by laser welding, so that in the course of the welding process, a zinc coating (24) supplied by the partially molten zinc coatings (22) of the neighbouring parts (11, 12) to be joined is automatically formed over each annular weld seam surface (25).

2. Process according to claim 1, characterised in that the hollow rod (11) and the end pieces (12) of the rod elements (10) are provided with a zinc coating (22) which has a thickness in the region of 80 µ.

## Revendications

1. Procédé pour la fabrication d'éléments de barre zingués notamment pour des treillis ou des treillis à trois dimensions dans lequel des éléments d'extrémité, de préférence des éléments d'extrémité de forme tronconique sont fixés aux extrémités d'une barre creuse au moyen de soudures annulaires, les soudures annulaires étant effectuées en faisant tourner la barre creuse et les éléments d'extrémité dans des positions centrées, les uns par rapport aux autres, et fixes axialement par exemple par serrage, caractérisé en ce que la barre creuse (11) et des éléments d'extrémité (12) pour chaque élément de barre sont zingués comme pièces séparées et, ensuite, les soudures annulaires (18) entre la barre creuse (11) zinguée et les éléments d'extrémité (12) zingués sont effectués au moyen d'un soudage laser de telle sorte qu'au cours du processus de soudage, un revêtement de zinc (24) se forme automatiquement sur chaque surface (25) de soudure annulaire, à partir des revêtements de zinc (22) fondus des éléments (11, 12) contigüs et devant être reliés.

2. Procédé selon la revendication 1, caractérisé en ce que la barre creuse (11) et les éléments d'extrémité (12) des éléments de barre (10) sont munis d'un revêtement de zinc (22) qui possède une épaisseur d'environ 80µm.
